# EUROPEAN PATENT APPLICATION

(11) **EP 1 207 478 A2**
(43) Date of publication of application: **22.05.2002**
(21) Application number: 01125874.6
(22) Date of filing: 30.10.2001
(51) Int. Cl.: G06F 17/60

(54) **Operation planning method and operation planning apparatus**

(30) Priority: 31.10.2000 JP 2000333743; 15.03.2001 JP 2001074155
(71) Applicant: TOYOTA JIDOSHA KABUSHIKI KAISHA, Aichi-ken 471-8571 (JP)
(72) Inventor: Nishimoto, Yasuyuki, Toyota-shi, Aichi-ken, 471-8571 (JP); Nakatsuka, Masato, Toyota-shi, Aichi-ken, 471-8571 (JP); Kasuya, Satoru, Toyota-shi, Aichi-ken, 471-8571 (JP)
(74) Representative: Böckelen, Rainer

(57) **Abstract**

An operation planning method is provided for making an operation plan for receiving a plurality of products from a supplier, and mounting at least one item on each of the products based on specifications of each product . In this method, information relating to the products received from the supplier is initially acquired. The products received is a mixture of products whose specifications are determined before transportation of the products from the supplier, and products whose specifications are not determined by the time of transportation of the products. Then, an order is placed for desired items to be mounted on the products whose specifications are determined before transportation thereof, and an order is placed for desired items to be mounted on products whose specifications are determined during transportation thereof.

## Description

### BACKGROUND OF THE INVENTION

### 1. Field of the Invention

The invention relates to operation planning method and apparatus in which products are delivered to a destination at which necessary items, such as accessories for vehicles, are mounted on the products based on the specifications of each product.

### 2. Description of Related Art

In the case where the products are automobiles, for example, various specifications relating to accessories, including an air conditioner, audio equipment, a navigation device, a leather interior, etc., exist with respect to each vehicle model. Therefore, products completed in an automotive plant are subjected to additional operations in which various items, such as accessories, are mounted on the products based on the ordered specifications. To efficiently perform such additional operations, operation plans involving distribution of complete vehicles, placement of orders for accessories, mounting operations, delivery, etc. are formed as follows.

Initially, a delivery or transportation plan is formed based on a relationship between a desired product delivery date entered by a dealer who ordered the product, and the date of arrival of the product from a factory. Then, a plan for timing of ordering and delivery of items and a plan for mounting the items on the products are plotted on the basis of the delivery plan, the specifications ordered, and the stock.

In accordance with such plans, delivery instructions are given to a distributor, and instructions to order and supply items are given to an item supplier, thus allowing the items to be mounted on the products.

In the case where the products are made in, for example, Japan, and are sold overseas, the transportation lead time is normally long due to a long-distance transportation by ship. Therefore, it is impossible to precisely set or fix specifications of these products (e.g., vehicles) at the time when the products are completed in Japan. In view of this situation, orders can be received for products that are being transported (or are in the pipeline) as well as products that have reached their destinations. Even if a customer or a dealer enters a desired delivery date beforehand, however, it is difficult to meet the desired delivery date. Consequently, unlike the case where the transportation period is short, it is impossible to form a plan backward from the desired delivery date.

At overseas distributors, on the other hand, the work load greatly varies between days on which a vessel carrying products arrives, and days on which no such vessel arrives. It is therefore necessary to level out the work load in accordance with the capacity or capability to accomplish work in one day.

Conventionally, arrangement of items is conducted based solely on prior information, namely, information available before shipping of products. However, in the case of overseas distributors, a stockyard exists on one side of a working area in which the items are mounted on the products, and orders are placed for products stored in the stockyard. In addition, orders are also placed for products (e.g., vehicles) that are in the pipeline until the vessel carrying the products arrives at the port. Therefore, it is necessary to arrange accessories even for products that are not available from the prior information. Otherwise, products will always sit or remain for a period of time corresponding to the lead time of the items to be mounted on the products.

In the meantime, distances from an overseas distributor of automobiles to designated locations vary to a certain extent. Thus, the number of days required for transportation varies depending on the direction of delivery. As a result, restrictions may be imposed on the number of trailers that can be arranged for each direction of delivery. It is therefore necessary to make an operation plan taking account of transportation of products in each direction.

In the case of domestic production and domestic sales, products are temporarily placed in a stockyard (which may be a shipment yard at the place of production, or an intermediary yard) from which a delivery time can be relatively accurately calculated. Then, the date of completion of delivery is determined based on the delivery time, and further based on the time for mounting items on the products, the time for new car inspection, the transportation/delivery time, etc. Dealers or distributors are informed of the date of completion of delivery thus determined. In response to the information, each dealer enters a desired delivery date, so that a plan can be made backward from the desired delivery date as a reference point. However, if the lead time from the place of production to the destination of supply, such as an overseas location, is very long, the time required for transportation/ delivery of products cannot be accurately estimated as mentioned above. Therefore, if a desired delivery date is to be initially entered, it is necessary to take account of a considerably large safety factor regarding the lead time related to the transportation/delivery time. As a result, the products will sit or remain for a long period of time in a yard near the working area in which mounting of the items and new-vehicle inspection are performed.

If an order is placed in advance based on prediction or expectation of future orders, in an attempt to solve the above problem, the products ordered in advance need to match products ordered by customers at a very high probability. Namely, the probability (or hit rate) of matching between predicted orders and actual orders must be very high, though it is very difficult to achieve such a situation. It may be also considered to place products at an intermediary location that allows relatively accurate calculation of the transportation time. However, this method will require a great number of stock books, and is therefore not practicable, if there are many types of products and various specifications for each product as in the case of automobiles.

Thus, with regard to vehicles for overseas sales or the like, various problems as stated above occur in a system in which orders can be placed for vehicles that are in the pipeline as well.

### SUMMARY OF THE INVENTION

It is an object of the invention to provide a system that allows orders for items, such as accessories to be mounted on vehicles, to be placed with improved efficiency.

To accomplish the above and/or other object(s), there is provided according to one aspect of the invention an operation planning method of making an operation plan for receiving a plurality of products from a supplier, and mounting at least one item on each of the products based on specifications of the each product. The method includes the steps of: (a) acquiring information relating to the products received from the supplier, the products being a mixture of products whose specifications are determined before transportation of the products from the supplier, and products whose specifications are not determined by the time of transportation of the products, and (b) making an operation plan so as to place an order for desired items to be mounted on the products whose specifications are determined before transportation thereof, and place an order for desired items to be mounted on products whose specifications are determined during transportation thereof.

According to the method as described above, an order is placed for items to be mounted on products that are being transported, so that item mounting operations can be smoothly started immediately after arrival of the products. In particular, in the case where the products are transported to a foreign country on a vessel over a long period of time, for example, necessary items can be ordered in advance, i.e., before the arrival of the vessel, thus assuring improved operation efficiency, and a reduction in the lead time up to the delivery of the products.

For example, items to be mounted on products that were ordered during transportation thereof (e.g., x days or more before the arrival of the vessel) are arranged based on prior information. For products that are ordered thereafter, it is preferable to prepare a stoke of items for several days in advance, and place an additional order if necessary. In this manner, the required items can be supplied with high reliability, for use in the item mounting operations, while requiring the minimum stock of items.

### BRIEF DESCRIPTION OF THE DRAWINGS

The foregoing and/or other objects, features and advantages of the invention will become apparent from the following description of preferred embodiments with reference to the accompanying drawings, wherein like numerals are used to represent like elements and wherein:
FIG. 1 is a diagram illustrating an overall arrangement of a system including an operation planning apparatus according to one embodiment of the invention;
FIG. 2A and FIG. 2B are diagrams illustrating the overall operations of the embodiment of FIG. 1;
FIG. 3 is a flowchart illustrating a process of placing an order for accessories to be mounted on vehicles;
FIG. 4A and FIG. 4B are flowcharts illustrating a process of placing an order in advance for accessories based on prediction of future orders for vehicles;
FIG. 5 is a diagram illustrating a logic for determining the priority order;
FIG. 6A and FIG. 6B are diagrams for explaining restrictions due to the operation capacity or capability;
FIG. 7A and FIG. 7B are diagrams for explaining restrictions due to transportation capacity;
FIG. 8 is a diagram showing the manner of setting the priority order for each dealer;
FIG. 9 is a diagram illustrating an example in which an operation plan is made so as to carry out operations for mounting accessories on one vehicle separately over two days;
FIG. 10A and FIG. 10B are flowcharts illustrating a process executed according to another embodiment of the invention;
FIG. 11 is a diagram illustrating a priority logic that is determined taking account of a desired delivery date;
FIG. 12 is a diagram illustrating a process starting with unloading of vehicles from a vessel and ending upon delivery of the vehicles; and
FIG. 13 is diagram showing an output format of an operation plan.

### DETAILED DESCRIPTION OF PREFERRED EMBODIMENTS

Preferred embodiments of the invention will be hereinafter described with reference to the accompanying drawings.

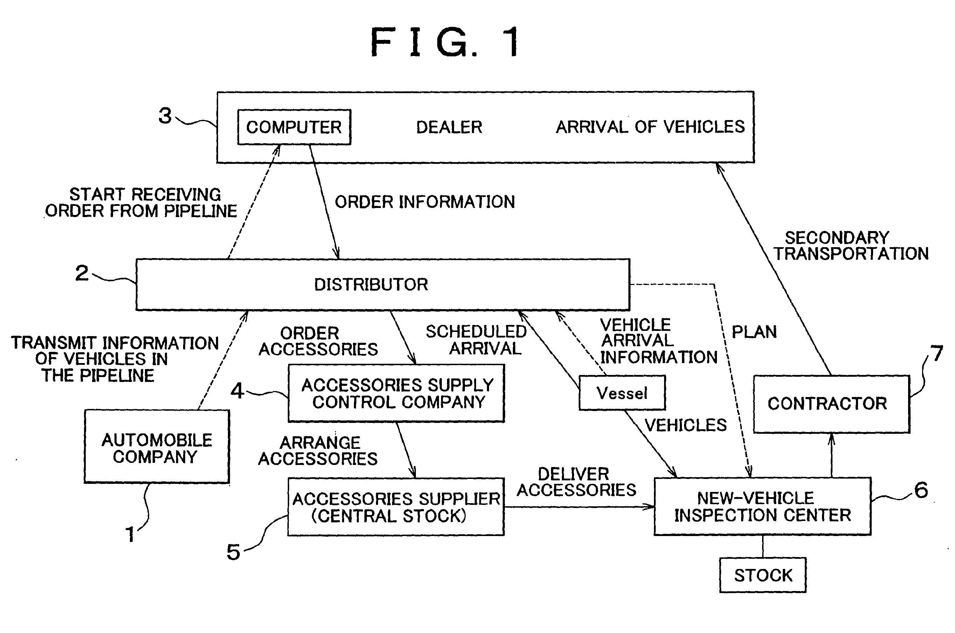

FIG. 1 illustrates an overall arrangement of a system including an operation planning apparatus according to one preferred embodiment of the invention. An automobile company 1, which manufactures motor vehicles as products, is located in, for example, Japan. The vehicles produced in the automobile company 1 are not equipped with later-mounted accessories, or the like. The vehicles thus produced are loaded in a vessel, and are shipped or transported to an overseas port.

On the other hand, distributors 2 and dealers 3 are present in a country to which the vehicles are transported. Each of the dealers 3 performs sales activities so as to sell vehicles to customers. Each of the distributors 2 manages operations to supply accessories, mount them on vehicles to be sold, and deliver the vehicles to the dealers 3, based on order information from the dealers 3. The distributor 2 places an order with an accessories supply control company 4 for desired accessories. The accessory supply control company 4 arranges supply of the accessories from an accessories supplier (or a central stock) 5, and the accessories supplier 5 supplies the accessories to a new-vehicle inspection center 6 at appropriate timing.

The vehicles arriving at the overseas port are transported to the new-vehicle inspection center 6, where predetermined operations for mounting accessories on the vehicles and predetermined checking operations are carried out. Upon completion of these operations, the vehicles are delivered, by a contractor or contractors 7, to the dealers 3 who placed the orders for these vehicles.

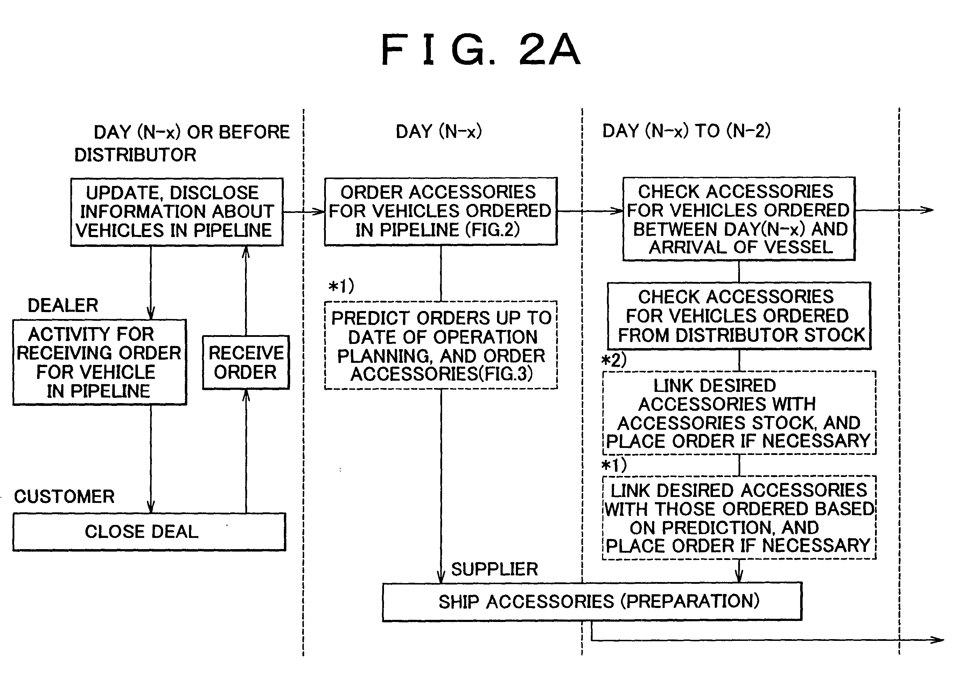

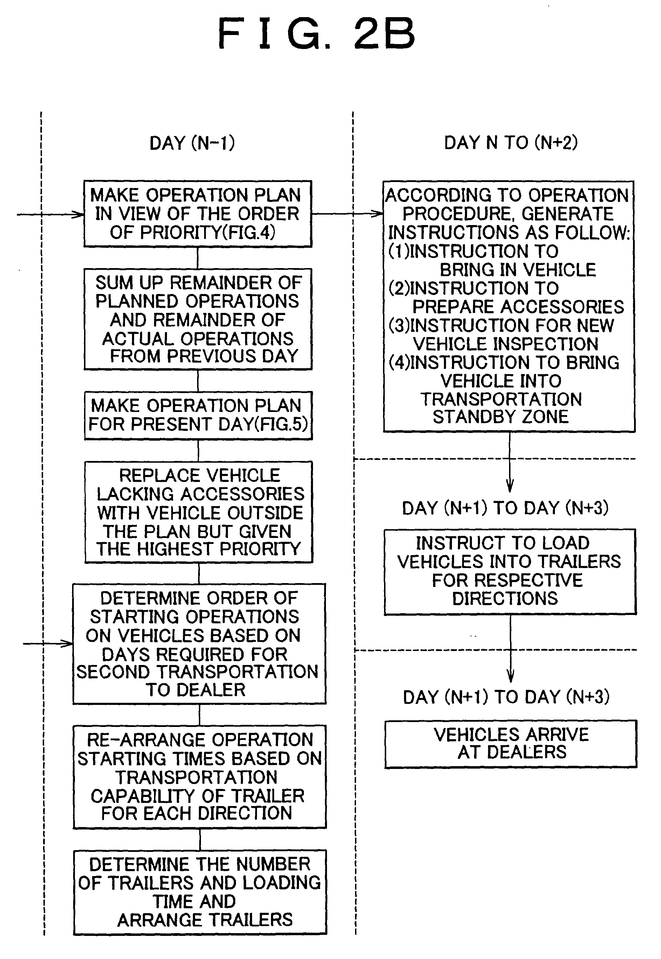

The above-described procedure will be explained with greater detail with reference to FIG. 2A and FIG. 2B. First, prior to Day (N-x), the distributor 2 occasionally updates information regarding vehicles that are in the pipeline and can be ordered, and discloses the information to the dealer 3. In FIG. 2A, "x" represents the number of days obtained by adding the number of days needed for the arrangement and the operation planning (e.g., two days) to the lead time from the placement of orders for accessories to the delivery thereof. Up to Day (N-x), therefore, the distributor 2 need not to start arranging for accessories to be mounted on vehicles.

The dealer 3 performs activities for receiving orders for vehicles that are in the pipeline. If a customer decides to purchase a vehicle, the dealer 3 supplies information regarding the order by the customer to the distributor 2. On the basis of the order information, the distributor 2 updates the information regarding vehicles that are available, i.e., vehicles that are for sale.

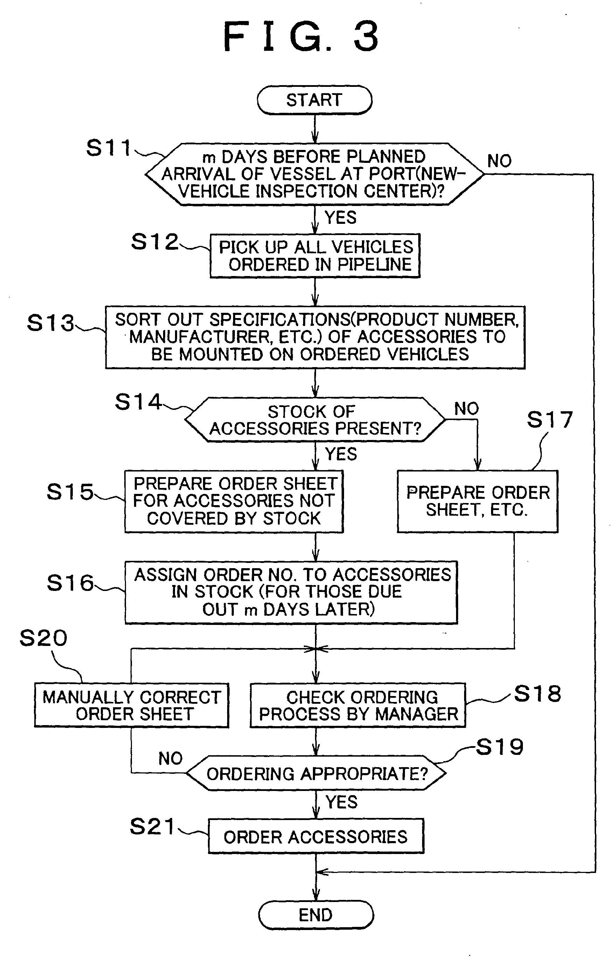

On Day (N-x), the distributor 2 places an order for accessories for ordered vehicles that are in the pipeline. That is, the distributor 2 places an order with the accessories supply control company 4 for necessary accessories based on the content of the orders received by the dealer(s) 3 up to this day (N-x). In this case, the amount of the order placed is determined taking account of the amount of stock in the accessories supplier (central stock) 5. This order placement will be described below with reference to FIG. 3.

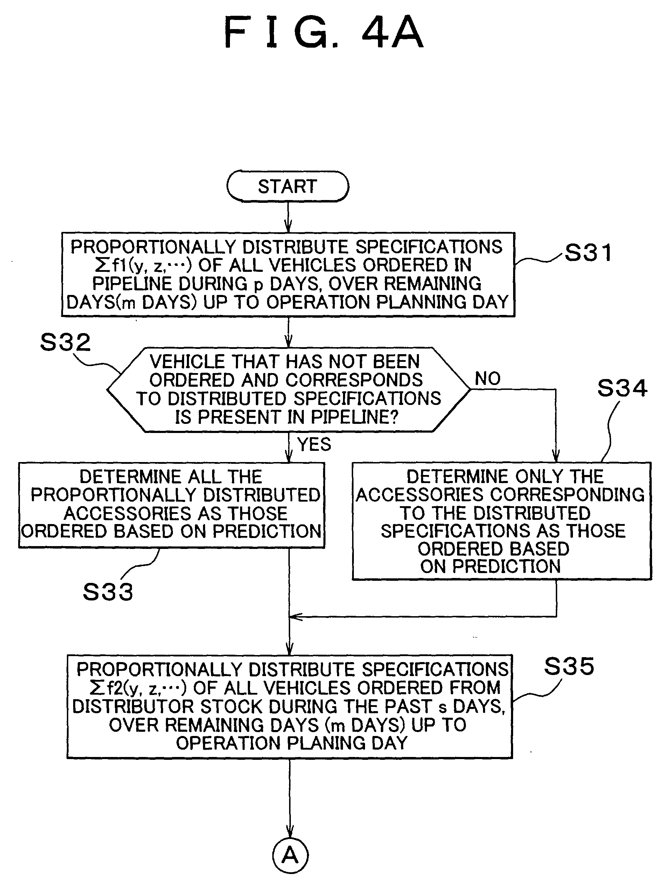

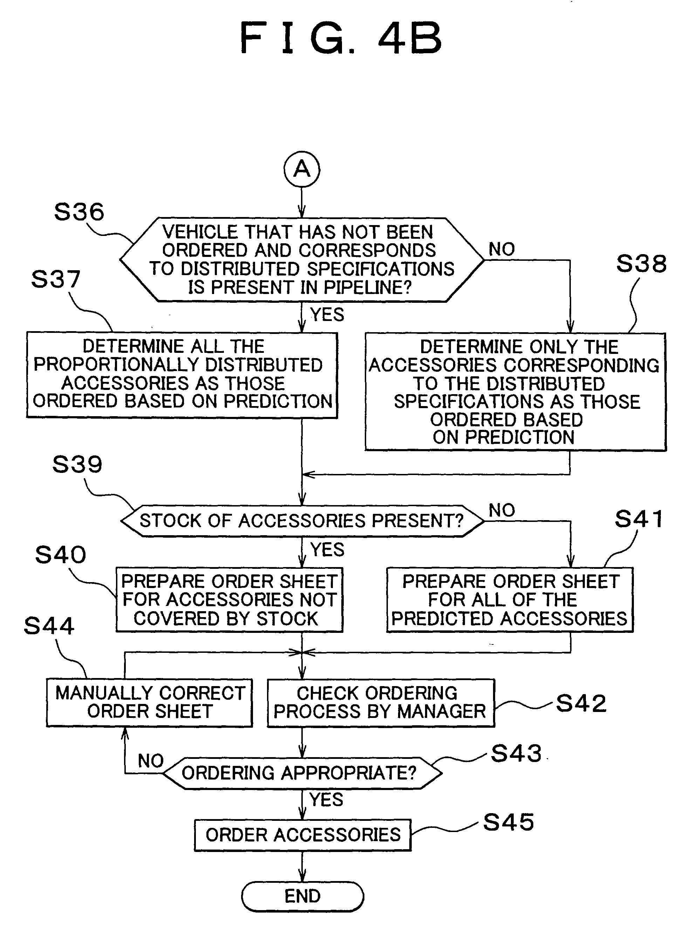

The accessories supply control company 4 delivers a required quantity of accessories to the accessories supplier 5. Then, the accessories supplier 5 prepares for the shipment of the accessories. The distributor 2 may place an order for accessories based on the currently received orders and future orders for vehicles. Namely, the distributor 2 may predict orders that will be received up to the day of making an operation plan, based on data of vehicles that have not been ordered or are still for sale. In this case, the order is placed for accessories to be mounted on the vehicles that will be ordered in the future, as well as those to be mounted on the vehicles that have been ordered. The predicted order placement will be described with reference to FIG. 4A and FIG. 4B.

During the period between Day (N-x) and Day (N-2), the distributor 2 checks accessories required for a vehicle or vehicles ordered during the period between Day (N-x) and the arrival of the vessel at the port. The distributor 2 also checks its stock for the accessories to be mounted on the ordered vehicles.

Additional accessories may be supplied as needed. Namely, the accessories to be mounted on the vehicles that have been ordered are linked with the accessories that are in stock at the distributor 2, and the accessories to be used are subtracted or removed from the stock. If the stock falls below the lower limit, an order is placed for additional accessories. When the predicted order placement is conducted, accessories to be mounted on vehicles that are expected to be ordered are linked with the accessories that are in stock, and an order is placed for additional accessories if there is a shortage in the accessories in stock.

In this manner, required accessories are supplied to the accessories supplier 5 via the accessories supply control company 4. The accessories supplier 5 then prepares for the shipment of the required accessories.

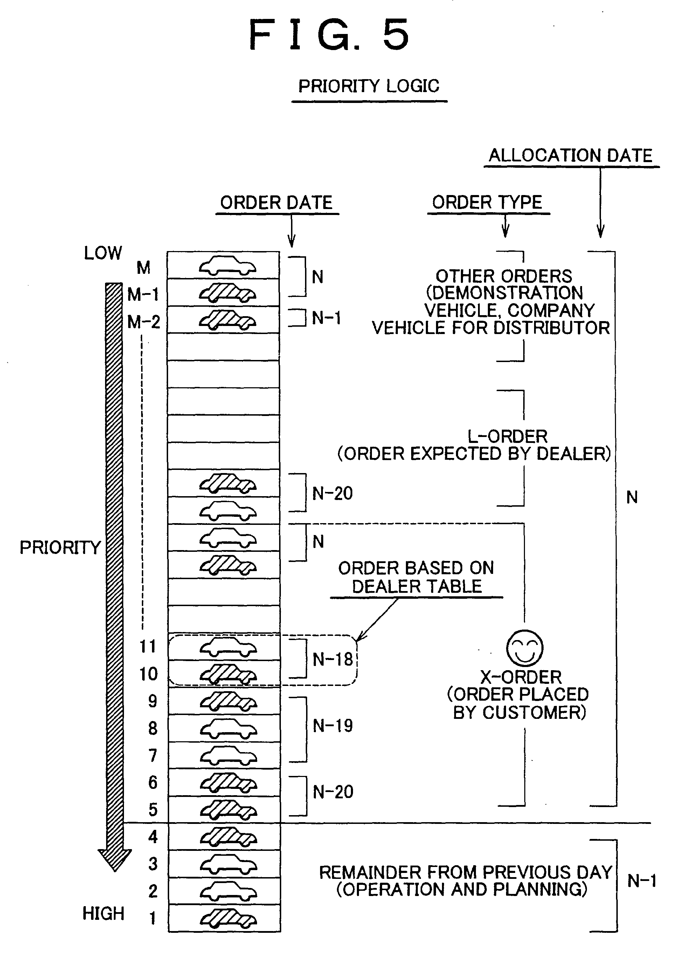

On Day (N-1), a provisional operation plan is prepared, taking the priority into consideration, with respect to the ordered vehicles among the vehicles from the vessel arriving the day before, and the vehicles in stock. The order of priority with which the vehicles are worked on will be described below with reference to FIG. 5.

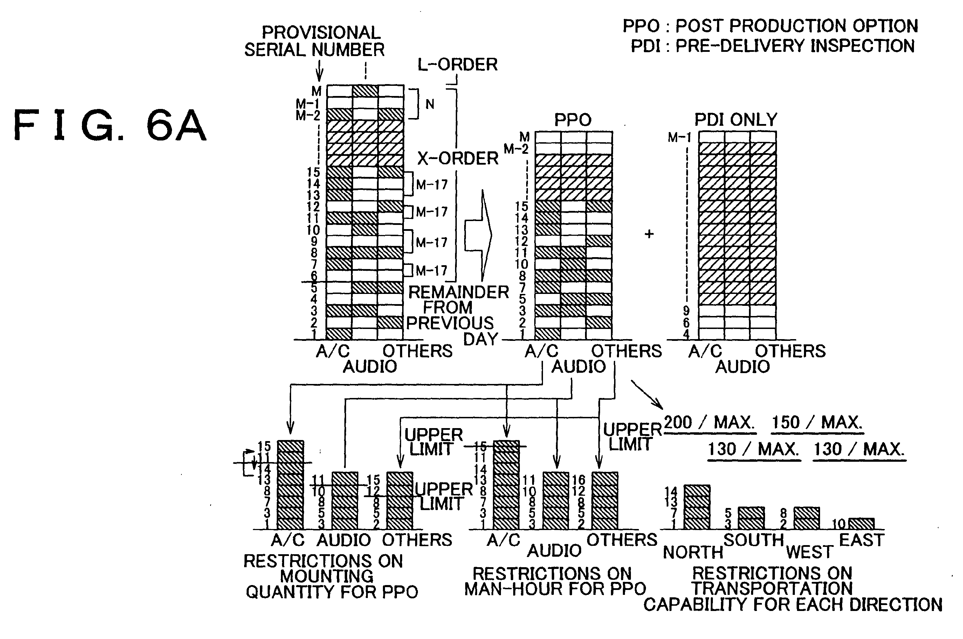

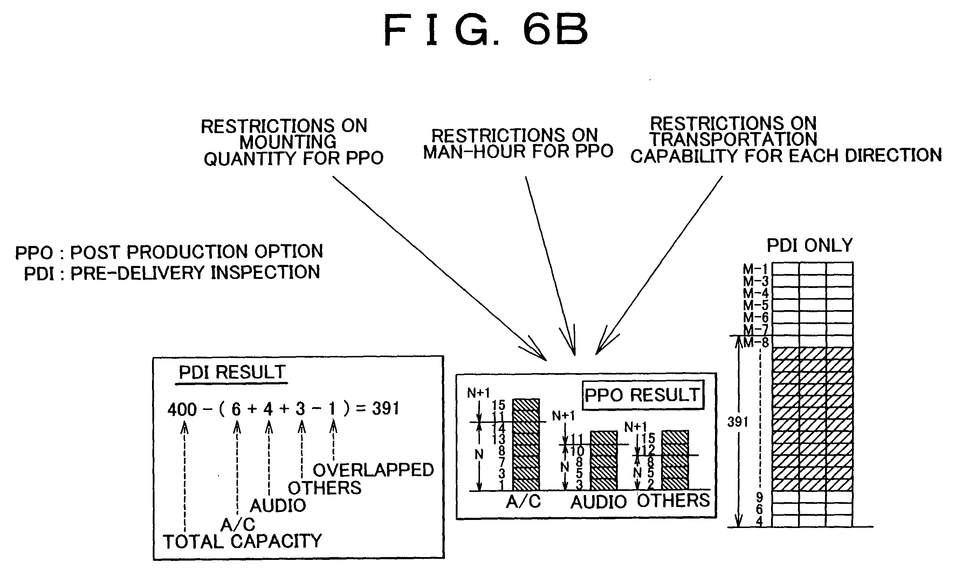

Then, the remainder of planned operation for the previous day and the remainder of actual operations for the previous day are summed up. Here the remainder of planned operations mean operations that were postponed on the planning stage to be done on the present day, and the remainder of actual operations mean operations that were scheduled to be done on the previous day but actually postponed to be done on the present day. The sum is added to the operation plan for the present day, and the planned work load for the present day is calculated. In this case, the highest priority is given to the remainder of actual operations, and the next highest priority is given to the remainder of planned operations, and then to planned operations for the present day. Furthermore, a total operation plan is considered, so as to prepare an operation plan for the present day through the process as illustrated in FIG. 6A and FIG. 6B.

In addition, the accessories to be supplied from the accessories supplier 5 for use according to the above operation plan are checked. If there is any shortage in the supply, the operation plan is modified by replacing planned operations for which accessories are not available, by operations (that is out of the operation plan for the present day) to which the highest priority is given.

Next, the vehicles are classified into groups depending upon the number of days of secondary transportation to the dealers. A sequence of operations performed on vehicles is determined such that the greater the number of days required for the transportation of vehicles, the earlier operations on these vehicles are started. Furthermore, the operation starting points of time are rearranged so that the operation is completed with respect to one lot that represents the trailer capacity ("n" or the number of vehicles/trailer), which is set for each destination of the vehicles to be delivered. In this manner, the number of trailers and the time required for loading the trailers with vehicles are determined, for arrangement of necessary trailers.

During the period between Day N and Day (N+2), operation instructions are generated in accordance with the operation sequence. More specifically, the operation instructions generated in this period include: (i) an instruction to carry in each vehicle to be worked on, (ii) an instruction to prepare accessories, (iii) an instruction to perform new car inspection, and (iv) an instruction to send the vehicle out to a transportation standby zone, etc.

During the period between Day (N+1) and Day (N+3), an instruction to load a trailer or trailers with vehicles for each delivery distribution is generated, so that the vehicles are delivered to desired destinations. In this manner, the vehicles with ordered specifications reach the dealers during the period between Day (N+1) and Day (N+3).

Next, a process of placing an order for accessories based on prior information will be described with reference to FIG. 3. First, it is determined in step S11 whether it is "m" days (e.g., 2 days) before the scheduled arrival of the vessel at the port (or the new-vehicle inspection center). If a negative decision "NO" is obtained in step S11, the process of FIG. 3 is terminated. If an affirmative decision "YES" is obtained, all of the ordered vehicles that are in the pipeline are picked up in step S12. The specifications (product number, manufacturer, etc.) of the accessories to be mounted on the ordered vehicles are sorted out in step S13. Thus, it becomes possible to learn which accessories are needed. Then, it is checked in step S14 whether there are remaining accessories in stock. If there are remaining accessories in stock, an order sheet is prepared in step S15 for placing an order for accessories that are in excess of the remaining accessories, and the accessories remaining in stock are linked with Order No. or other identification in step S16. Namely, data is entered which indicates that these remaining accessories in stock are due out of stock "m" days later. Conversely, if it is determined in step S14 that there are no remaining accessories in stock, an order sheet for accessories to be used is prepared in step S17.

If the order sheet is prepared, a managing person checks the ordering process in step S18, and judges in step S19 whether the ordering process is appropriately carried out. If a negative decision "NO" is obtained in step S19, the ordering process must be carried out again. After the order sheet, or the like, is manually corrected in step S20, the process returns to step S18. If it is determined in step S19 that the ordering process is appropriately carried out, an order for the required accessories is placed in step S21.

Thus, according to the flowchart of FIG. 3, arrangements for the accessories are made based on prior information, so that the accessories are mounted on the vehicles ordered in the pipeline on or before Day (N-x). For vehicles ordered after Day (N-x), accessories are re-supplied in advance so as to maintain the stock for several days. In this manner, it is possible to ensure supply of required accessories, with the minimum stock, thus permitting operations to mount the accessories on the vehicles ordered.

Referring next to FIG. 4A and FIG. 4B, a process of placing an order for accessories for vehicles that are expected to be ordered, based on the theory of proportional distribution. In step S31, vehicle specifications Σf1 (y, z, ...) (y: vehicle model, z: accessories, ...) of all of the vehicles ordered in the pipeline during an order receiving period (p days) are checked, and are proportionally distributed over the remaining days (m days) up to the date on which the work load is planned. Thus, the predicted number of accessories is obtained by multiplying Σf1 (y, z, ...) by m/p. Namely, the quantity of accessories required per day is determined by dividing the total quantity of accessories required from the orders received during the "p" days, by "p". The predicted quantity of accessories based on proportional distribution is calculated by multiplying the quantity of accessories required per day by the "m" days during which orders are expected to be received.

It is determined in step S32 whether vehicles that are in the pipeline and have not been ordered correspond to the proportionally distributed vehicle specifications. If an affirmative decision "YES" is obtained in step S32, all of the proportionally distributed accessories are determined as expected accessories to be ordered in step S33. Conversely, if a negative decision "NO" is obtained in step S32, expected accessories to be ordered are determined in step S34 by removing accessories for vehicles that are not in the pipeline or have been ordered, from the proportionally distributed accessories.

Next, the vehicle specifications Σf2 (y, z, ...) (y: vehicle model, z: accessories, ...) of all vehicles ordered from the stock of the distributor for the past "s" days (e.g., one month) are proportionally distributed over the remaining days (i.e., m days) up to the date on which the work load is planned. Thus, the predicted number of accessories is obtained by multiplying Σf2 (y, z, ...) by m/s. Then, as in steps S32 to S34, it is determined in step S36 whether vehicles that are in the pipeline and have not been ordered correspond to the proportionally distributed vehicle specifications. If an affirmative decision "YES" is obtained in step S36, all of the proportionally distributed accessories are determined as expected accessories to be ordered in step S37. Conversely, if a negative decision "NO" is obtained in step S36, expected accessories to be ordered are determined in step S38 by removing accessories for vehicles that are not in the pipeline or have been ordered, from the proportionally distributed accessories.

Next, it is checked in step S39 whether there are remaining accessories in stock. If there are remaining accessories in stock, an order sheet is prepared in step S40 for placing an order for accessories that are in excess of the remaining accessories. Conversely, if it is determined in step S39 that there are no remaining accessories in stock, an order sheet for accessories to be used is prepared in step S41.

If the order sheet is prepared, a managing person checks the ordering process in step S42, and judges in step S43 whether the ordering process is appropriately carried out. If a negative decision "NO" is obtained in step S43, the ordering process must be carried out again. After the order sheet, or the like, is manually corrected in step S44, the process returns to step S42. If it is determined in step S43 that the ordering process is appropriately carried out, an order for the required accessories is placed in step S45.

Thus, according to the flowcharts of FIG. 4A and FIG. 4B, arrangements for the accessories are made based on prior information, so that the accessories are mounted on the vehicles ordered in the pipeline on or before Day (N-x). For vehicles ordered after Day (N-x) up to the operation planning date, accessories are ordered in advance based on demand prediction. With this arrangement, the operation of mounting accessories on all of the ordered vehicles can be performed while only requiring stock that contains accessories that were expected to be used for later-ordered vehicles but were actually not used. Since prediction is effected based on information obtained just before the prediction, the probability of a failure in predicting required accessories is considerably low.

Next, a logic for determining the order of priority used when making an operation plan on Day (N-1) will be described with reference to FIG. 5.

In the operation plan, vehicles in question are classified into groups based on the date (which will be called "allocation date") on which each vehicle is ready to be worked on, namely, an operation can be performed on the vehicle. Among these groups, the one with the earliest allocation date is given the highest priority. In FIG. 5, the higher priority is given to vehicles that were planned to be worked on on the previous day but are still remaining or waiting for operations. These vehicles were ready for operations on Day (N-1). In FIG. 5, one group of vehicles with the allocation date N-1 are those which were ready for operations the previous day, and the other group of vehicles with the allocation date N are those which are ready for operations on the present day.

The vehicles having the same allocation date are then classified into groups with different priorities, on the basis of the type of an order placed for each vehicle. Namely, the vehicles are prioritized, depending upon whether the order for the vehicle is an order from a customer (X-order), an expected order from a dealer (L- order), or other orders, for example, a demonstration model or the like.

In FIG. 5, vehicles that were ordered by customers are given the highest priority. Next, such vehicles that were in the pipeline or in stock and were ordered on the earlier date are given the higher priority. If there still are a plurality of vehicles at the same priority level, the order of priority is determined in accordance with the dealer-based priority (dealer table). The order of priority based on dealers may be determined with reference to, for example, the number of vehicles sold by each dealer in the previous year. It is preferable to have a database relating to dealers and the order of priority given to these dealers.

Although the factors that determine the priority order with which the operation plan is made in this embodiment have been mentioned above, there may be cases where two or more vehicles are still at the same priority level. In such cases, the system adopts a production number of each vehicle as the last factor. That is, the higher priority is given to a vehicle having the smaller production number. Since the production number is unique to each vehicle, the priority order is finally determined without fail on the basis of the production number.

Although in the foregoing embodiment, the order of priority is determined in the above-described procedure, the priority order may be determined in any other procedure. For example, the factors based on which the priority order is determined may be considered in the order of the order date, the order type, the allocation date, and the dealer table, or one or more of the factors may be omitted.

If the priority-assigning logic as mentioned above is used to prepare an operation plan, variations in the lead time up to the time of delivery of a product to a customer will be considerably reduced, and variations due to a planning failure or the like can be substantially eliminated. Although very small variations may occur, the reason for the variations is clear, and is very likely to be understood.

It is preferable that the priority order can be arbitrarily set in accordance with policies or circumstances of the country where the distributor is located.

The priority order for operations for one day is determined in the manner as described above. On the basis of the thus-determined priority order, it is considered whether the operations can be actually performed, in view of restrictions due to the capacity of operation lines. On the basis of the result of consideration, the order of operations is adjusted.

To this end, the vehicles are classified into some groups in accordance with the contents of operations to be performed. That is, the vehicles are classified into vehicles that only require new-vehicle inspection operations (PDI), and vehicles that require accessories mounting operations (PPO). The vehicles only requiring new-vehicle inspection normally require only several minutes of work, without requiring special technique, and can be accomplished by any worker if he or she is given a certain time (i.e., man-hour). The vehicles requiring accessories mounting operations require a certain amount of time of operations for each vehicle, and requires special technique, thus suffering from a restriction on the number of vehicles that can be processed per time. Among these vehicles, the vehicles involving the accessories mounting operations (PPO) are first considered. Namely, the vehicles are checked in view of a quantity restriction and a man-hour restriction simultaneously. A vehicle or vehicles that cannot be worked on due to the quantity or man-hour restriction on the present day is/are moved to the highest-priority position(s) in the next-day operation plan.

As indicated in an upper left portion of FIG. 6A, vehicles are assigned with provisional serial numbers 1 to M and are arranged in this order in accordance with the priority logic illustrated in FIG. 5. It is then checked whether each vehicle needs an accessories mounting operation, and the numbered vehicles are classified based on this criterion. In this case, the vehicle 1 needs installation of an air-conditioner (A/C), the vehicle 2 needs installation of other accessories (OTHERS, e.g., leather interior and the like), the vehicle 3 needs installation of an air-conditioner and audio equipment (AUDIO), and the vehicle 4 does not need installation of any accessories. Therefore, the vehicles 1 to 3 are classified as vehicles that require the accessories mounting operations (PPO), and the vehicle 4 is classified as a vehicle that needs only the new-vehicle inspection operation (PDI). Likewise, all the other vehicles are classified.

Subsequently, it is checked whether the operations to mount accessories on the vehicles classified as PPO vehicles can be performed. That is, a restriction on the quantity of each item of accessories and a restriction on the man-hour are both considered with respect to each item of the accessories to be mounted on the vehicles. In this case, as indicated in a lower, left portion of FIG. 6A, eight vehicles require installation of air-conditioners though air-conditioners can be installed only in six vehicles because of the quantity restriction. As a result, the vehicles No. 11 and No. 15 are excluded. Also, five vehicles require installation of audio equipment, though the installation can be done with respect to only four vehicles. As a result, the vehicle No. 11 is excluded. Furthermore, five vehicles require installation of the others, though the installation can be done with respect to only three vehicle. As a result, the vehicles No. 12 and No. 15 are excluded.

Moreover, in this embodiment, restrictions due to the transportation capacity for each direction or destination are taken into consideration. In this embodiment, the transportation capability of the trailers is considered with respect to four directions of delivery, namely, north, south, west, and east. As illustrated in a lower, right-side portion of FIG. 6A, the number of PPO vehicles to be delivered in each direction is well below the upper limit thereof, since the total number of the PPO vehicle is considerably small.

As a result of the above-checking of restrictions, the vehicles No. 11 and No. 15 are excluded from the vehicles that require the PPO, due to the restriction associated with air-conditioners. Also, the vehicle No. 11 is excluded from the PPO vehicles due to the restriction associated with audio equipment, and the vehicles No. 12 and No. 15 are excluded from the PPO vehicles due to the restriction associated with the other accessories. Thus, the vehicles No. 11, No. 12 and No. 15 are excluded from the PPO vehicles.

The numbers of vehicles subjected to the operations for installation of the air-conditioners, audio equipment, and the other accessories are six, four, and three, respectively. However, since the vehicles subjected to the respective operations overlap, the total number of vehicles is nine. Specifically, the operation for installation of an air-conditioner is performed on six vehicles, i.e., vehicles Nos. 1, 3, 7, 8, 13 and 14. The operation for installation of audio equipment is performed on four vehicles, i.e., vehicles Nos. 3, 5, 8 and 10. Other accessories are mounted on three vehicles, i.e., vehicles Nos. 2, 5 and 8. Therefore, in total, nine vehicles, namely, vehicles Nos. 1, 2, 3, 5, 7, 8, 10, 13 and 14, are subjected to the accessories mounting operations.

After the number of vehicles that require the accessories mounting operations (PPO) is determined as described above, the number of vehicles that require only the new-vehicle inspection operation (PDI) is determined to be equal to 391, which is obtained by subtracting 9 from 400 vehicles that is determined based on the total operation capacity. That is, the number of vehicles that require only the PDI equals the number obtained by subtracting the number of the PPO vehicles from the total number of vehicles contained in the operation plan.

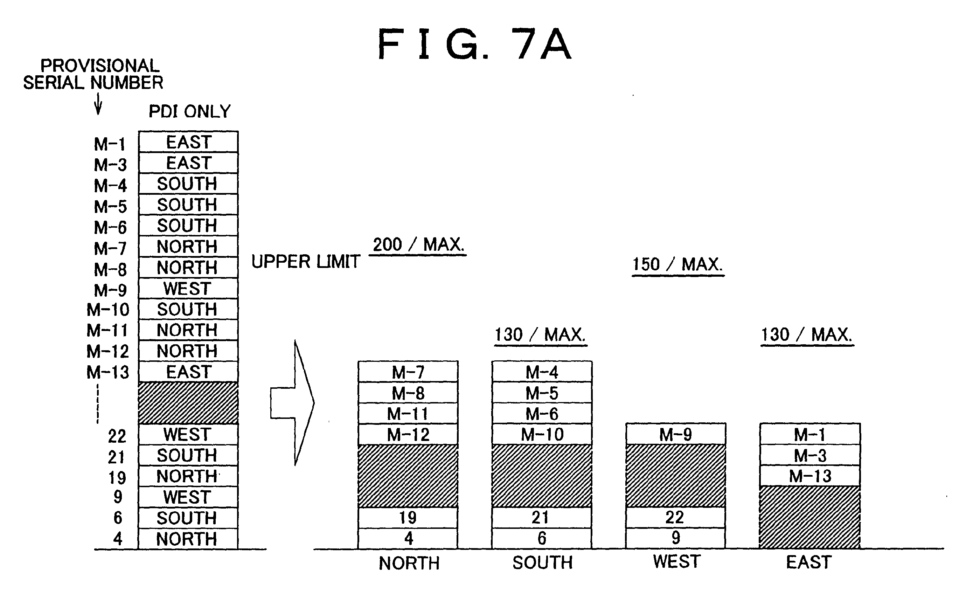

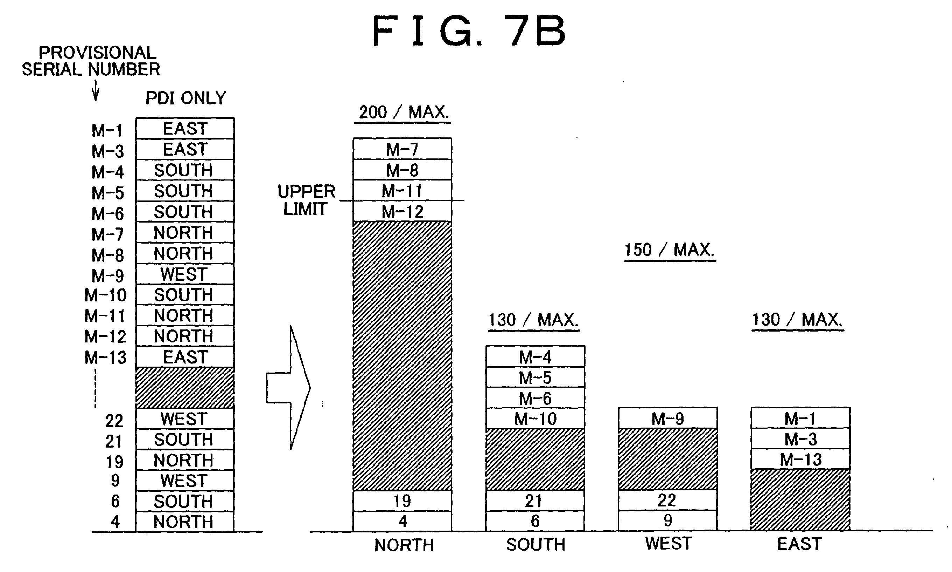

Then, the vehicles that need only the new-vehicle inspection operation (PDI) are checked in view of restrictions on the transportation capacity with respect to each direction of delivery. The manner of checking will be described with reference to FIG. 7A and FIG. 7B.

As indicated in FIG. 7A, the 391 vehicles that only need the PDI are classified into some groups depending upon the direction of destination. In this example, four groups are formed which correspond to four directions of delivery, that is, north, south, west, and east. The upper limits of the number of vehicles that can be transported in each direction are 200 for north, 130 for south, 150 for west, and 130 for east. Since the number of vehicles for each direction as indicated in FIG. 7A does not exceed any upper limit, there is no need for readjustment of the number of vehicles to be delivered in each direction.

In another example as shown in FIG. 7B, however, the number of north-bound vehicles exceeds the upper limit by two (i.e., M-11, M-8). Although M-1 to M-7 are also indicated in FIG. 7B, the vehicles M-1 to M-7 have been actually excluded. That is, operations can be performed on 391 vehicles among the vehicles that need only the new vehicle inspection operation (PDI), and therefore the vehicles M-1 to M-7 have already been excluded. Then, the two vehicles (M-11, M-8) are excluded from the north-bound vehicles, and vehicles M-6 and M-5 are added to the south-bound vehicles.

As is the case with the aforementioned excluded vehicles, a vehicle(s) that exceeds the upper limit in terms of the transportation capacity for each delivery direction is shifted to the highest-priority position in the next day's transportation plan. Instead, a vehicle(s) that is below the upper limit and is placed at the next highest-priority position is incorporated into the present day's transportation plan. In a case where there is no vehicle to be introduced into the plan, it is preferable to re-arrange a plan to expand up to the operation capacity limit even if the plan exceeds the transportation capacity. It is also possible to give the higher priority to the transportation capacity, and to allow the operation capacity to be below the upper limit thereof.

It is understood that the upper limits in terms of the transportation capacity with respect to the vehicles that require only the PDI are determined in view of the transportation capability with respect to the vehicles that involve the PPO. Namely, it is assumed that the transportation capacity regarding the vehicles that also need the accessories mounting operations (PPO) has been considered. That is, if vehicles that need the accessories mounting operations (PPO) are allocated for each of the directions of delivery, as indicated in the lower, right-side portion of FIG. 6A, the upper limits value of the transportation capacity for the vehicles that only need the PDI may be lowered only by the number of vehicles requiring the PPO that have been allocated for each direction.

The operation plan for the following days is displayed or printed out for review of a managing person. The managing person checks the presence of accessories for the following day's operation, also checks whether the delivered vehicles have any significant damages, and determines a final operation plan.

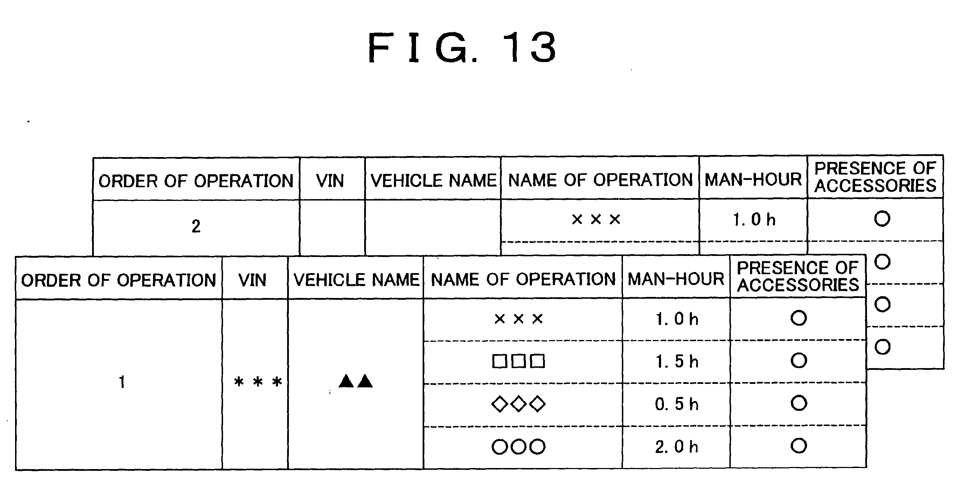

An example of an operation plan in an output format is shown in FIG. 13, in which vehicles are listed in the order of operations to be performed. For each vehicle, the VIN (vehicle identification number), the model name, the name(s) of operation or operations, the man-hour required for each operation, the presence/absence of accessories (for each operation), etc., are indicated as shown in FIG. 13.

In this manner, the operation plan is determined. Then, the vehicles that are to be processed on the date on which the operation plan is determined is rearranged, without being changed, in accordance with the directions of transportation (in the order in which the number of days required for transportation decreases). Rearrangement is also performed based on the operation time for each vehicle, taking it into consideration that vehicles may be completed in terms of a lot that can be transported in each direction by a single trailer.

In the manner as described above, the order of operations to be performed during the day is also determined. Then, the contractor (secondary transportation company) is provided with information relating to the quantity of trailers for each direction and the loading time required when the operations are performed in the order determined as described above. On the day of operation, various instructions are given in accordance with the aforementioned operation plan, the instructions including an instruction to prepare for installation of accessories, an instruction to prepare accessories for the vehicles to be processed, an instruction to bring new vehicles into the inspection zone, and an instruction to bring vehicles into a distribution stand-by zone for the secondary transportation.

In this embodiment, as a basic logic for determining the priority for accessories mounting operations as shown in FIG. 5, the earlier vehicles are ordered by customers, the higher priority is given to the vehicles for accessories mounting operations and new-vehicle inspection operations.

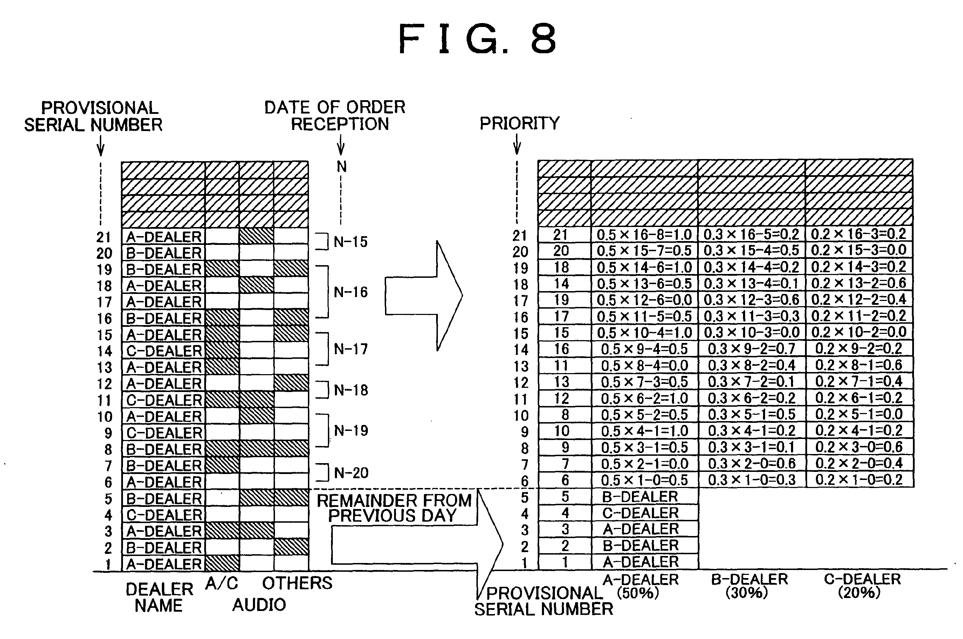

It is also possible to adopt a logic in which, as illustrated in FIG. 8, a leveling operation is performed on vehicles that are able to be processed on the allocation date, in accordance with the quantities of orders placed by respective dealers, and the number of vehicles that can be worked on on that date is allocated among the dealers, in proportion to the quantities of orders placed by the dealers.

That is, fixed proportions are given to the dealers beforehand, and the degree of priority is determined in accordance with the proportions. In the example of FIG. 8, the proportions are set as indicated, that is, 50% for A-Dealer, 30% for B-Dealer, and 20% for C-Dealer. The order of priority is then determined based on these proportions. In the example of FIG. 8, priority No. 1 to No. 5 are given to the remainder from the previous day, and priority No. 6 and the following are assigned to vehicles allocated for the presence day, in the manner as described below.

More specifically, an evaluation value for each dealer is determined by b × a - c, where "a" is a variable that indicates the serial number of a given vehicle for which the order of the priority is to be determined, "b" is the proportion, and "c" is the number of vehicles ordered by each dealer, for which the order of priority has already been determined. The order of priority that is currently determined is given to a vehicle for the dealer that gained the greatest evaluation value.

As illustrated in FIG. 8, for the 6^{th} priority, evaluation values are determined as follows: 0.5 x 1 - 0 = 0.5 for A-Dealer, 0.3 × 1 - 0 = 0.3 for B-Dealer, and 0.2 x 1 - 0 = 0.2 for C-Dealer. Therefore, the 6^{th} priority is given to the vehicle to be delivered to the A-Dealer. For the 7^{th} priority, the evaluation values are calculated as follows: 0.5 x 2 - 1 = 0.0 for A-Dealer, 0.3 × 2 - 0 = 0.6 for B-Dealer, and 0.2 × 2 - 0 = 0.4 for C-Dealer. Therefore, the 7^{th} priority is given to the vehicle to be delivered to the B-Dealer. For the 8th priority, the evaluation values are calculated as follows: 0.5 × 3 - 1 = 0.5 for A-Dealer, 0.3 × 3 - 1 = -0.1 for B-Dealer, and 0.2 × 3 - 0 = 0.6 for C-Dealer. Therefore, the 8^{th} priority is given to the vehicle to be delivered to the C-Dealer. In this manner, the order of priority can be assigned to vehicles for the dealers in accordance with the predetermined proportions for the dealers. Although the proportions are determined in accordance with the quantities of vehicles ordered by the respective dealers in the above example, it is also possible to adopt other conditions.

In the foregoing example, it is assumed that all of the operations performed on each vehicle, which may include a plurality of accessories mounting operations (PPO) as well as a new-vehicle inspection operation (PDI), can be completed in one day. In actual situations, however, the total man-hours for the operations may exceed the limit for one day since the plurality of accessories mounting operations (PPO) need be done on a single vehicle.

In such a case, it is preferable that the accessories mounting operations (PPO) for a vehicle be divided into two or more groups, and the vehicle be regarded as a combination of vehicles in such a fashion that the operation time for one day does not exceed the limit.

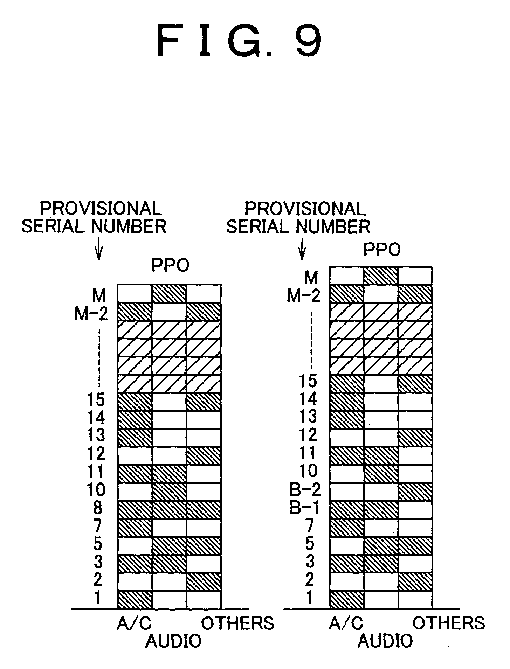

In the example of FIG. 9, a vehicle "8" that requires installation of an air-conditioner (A/C), audio equipment, and other accessories (leather seats and the like) is divided into a vehicle "8-1" that requires the air-conditioner and the audio equipment and a vehicle "8-2" that requires installation of a leather seat or the like. As a rule, the vehicle "8-1" and the vehicle "8-2" are not included in the operation plan of a single day. Under such a rule, an operation plan can be arranged in substantially the same manner as described above. Therefore, this manner of planning can cope with the aforementioned problems.

In the manner as described above, the vehicles produced in, for example, Japan are received at a time at an overseas distribution site, and operations to order later-mounted accessories, mount the accessories on the vehicle, perform new vehicle inspection, and deliver the vehicles to dealers are successively performed. In particular, in the country importing the vehicles, the required amount of such operations greatly varies between days on which vessels arrive, and days on which no vessel arrives (but operations are still performed on vehicles ordered from the distributor stock). By controlling the individual operations by use of a computer as described above, the operations can be equally divided into daily operations in accordance with the operation capacity, and the variation in the amount of operations can be reduced, while the lead time required for the vehicles to reach customers (dealers in this case) can be reduced.

In particular, as shown in FIGS. 3, 4A and 4B, prior information is obtained, and an order for accessories is placed in advance with improved efficiency.

Furthermore, the order of priority in making an operation plan is determined, using the logic as illustrated in FIG. 5, so that the order of operations to be performed can be reasonably and appropriately determined. Conventionally, an operation plan has been made by a supervisor on the site, and therefore there has a risk of a failure to make a plan, for example. However, making an operation plan by use of the above logic will eliminate such a risk, and will therefore prevent variations in the lead time in acquiring accessories. Furthermore, a failure to arrange accessories or occurrence of stockout can be prevented.

Furthermore, as shown in FIGS. 6A, 6B, 7A and 7B, an operation plan is made in view of the restrictions on the number of accessories and the man-hours required for mounting the accessories on the vehicles, and also in view of the restriction on the trailer capacity for each transportation direction. Then, a work load for one day is determined on the basis of the plan thus made. Subsequently, the order plan is made, with the higher priority being given to operations that require many man-hours and operations that require a long period of distribution (secondary transportation) to a dealer. Since the order plan is made in terms of a lot for each transportation direction, the transportation to the dealers can be accomplished with high efficiency.

Therefore, as for the vehicles ordered while they are in the pipeline, accessories can be arranged based on prior information. Thus, the stock of accessories can be reduced. Furthermore, since accessories needed for operations can be prepared just in time, an operation can be started without waiting for the arrival of the accessories.

### OTHER EMBODIMENTS

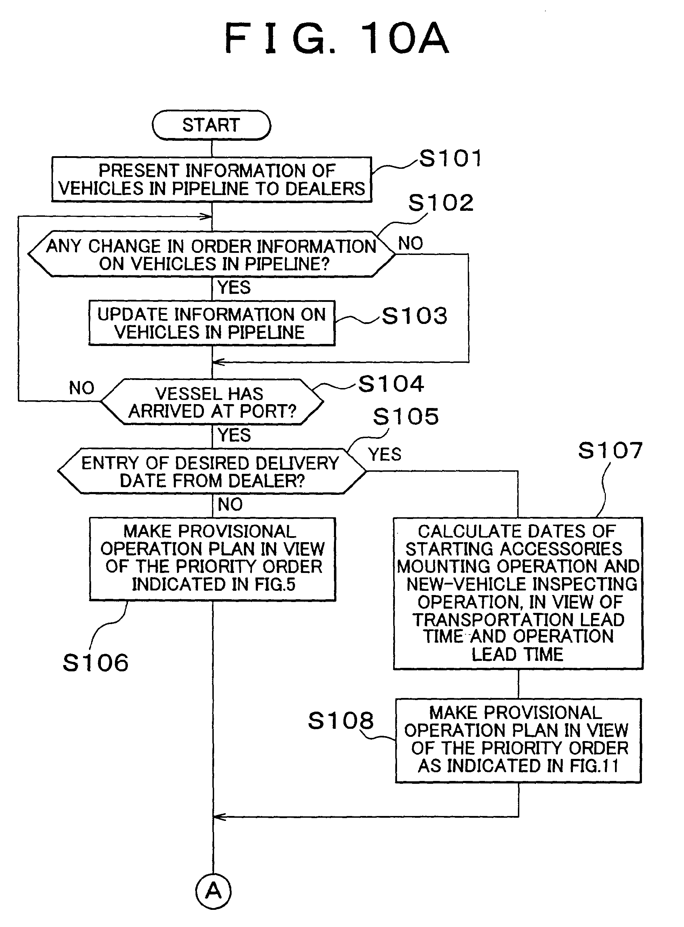

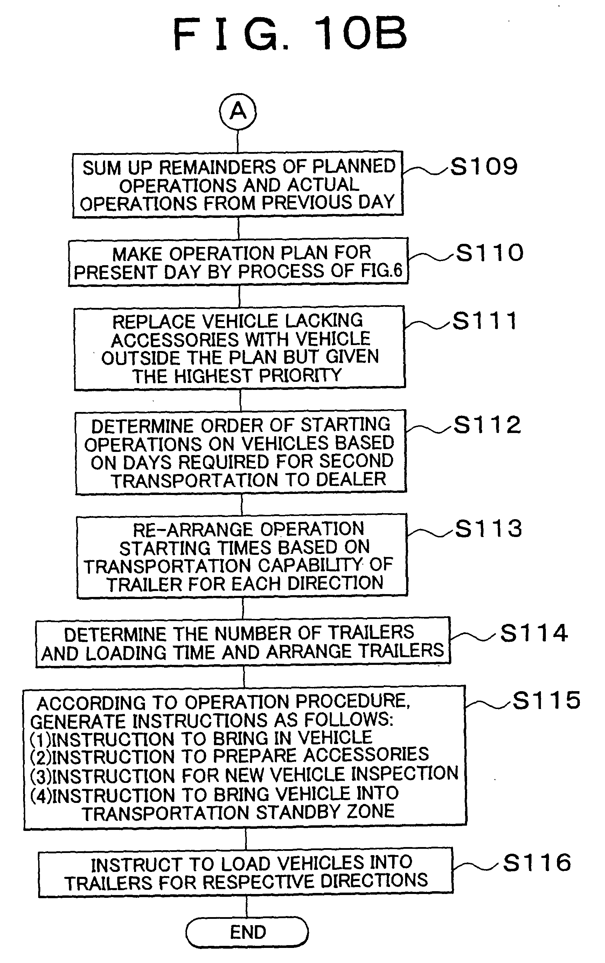

FIG. 10A and FIG. 10B are flowcharts regarding formation of an operation plan and an instruction to execute the operation plan in accordance with another embodiment. At an overseas port where completed vehicles are unloaded from a vessel, ordered vehicles arrive in one lot (which means the number of vehicles on the vessel) on discrete days, but not every day. In this case, the number of ordered vehicles that newly become objects of operations greatly vary from one day to another. Therefore, a great gap arises between the number of vehicles for which operations shall be performed, and the number of vehicles for which operations can be performed at the new-vehicle inspection center.

In this embodiment, the order of priority in an operation plan is determined depending upon the type of an order placed for each vehicle (e.g., an order received from a customer, an order based on prediction of a dealer, and other orders, such as an order for a demonstration vehicle), which order has been received at the time of arrival of the vessel at the port. The operation plan is then formed based on the order of priority thus determined. It is therefore possible to inform customers of correct delivery time, and to generate appropriate instructions for operations and delivery in accordance with the delivery time.

First, information regarding vehicles that are in the pipeline (transport vessel) and can be ordered is presented or announced to the dealers in step S101. The presentation may be accomplished by a computer of the distributor supplying the dealers with information from the motor vehicle company. As indicated in FIG. 2A, the vehicles subjected to presentation are vehicles that are in the pipeline and can be ordered. Next, it is determined in step S102 whether there is any change in the information relating to orders received with respect to the vehicles that are in the pipeline (S102). This determination is made not only based on information about closing of deals (i.e., receiving orders) at dealers but also based on information about orders based on prediction or expectation of the dealers. If there is any change in the above information, the information about vehicles that are in the pipeline and can be ordered is updated in step S103. Conversely, if it is determined in S102 that there is no such change, the updating in step S103 is not necessary, and is therefore skipped. Subsequently, it is determined in step S104 whether the vessel has arrived at a port where the vehicles are unloaded from the vessel. If the vessel has not arrived, the process returns to S102. That is, the order information is kept updated until the vessel arrives at the port. The updated order information is presented to the dealers.

If an affirmative decision "YES" is obtained in step S104, it is then determined whether a desired delivery date has been entered by a dealer (S105). That is, the system of the present embodiment is designed so that the dealer can enter a desired delivery date. When the desired delivery date is entered at a computer of the dealer, the data is transmitted to a computer of the distributor.

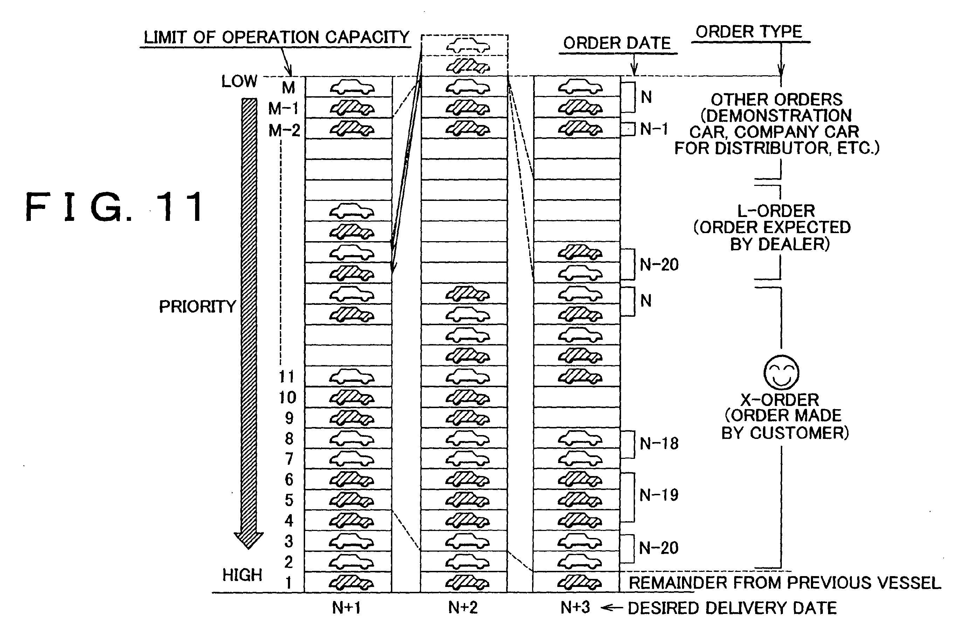

If a negative decision "NO" is obtained in step S105, a provisional operation plan is formed in step S106 by determining the order of priority in accordance with the priority logic as illustrated in FIG. 5. Conversely, if a dealer has entered a desired delivery date, the operation plan is formed taking the desired delivery date into consideration . That is, the date of starting an accessories mounting operation and the date of starting a new-vehicle inspecting operation are calculated, taking account of the transportation lead time and the operation lead time as counted from the desired delivery date of each of the ordered vehicles from the arriving vessel and the ordered vehicles from stock (S107). Then, a provisional operation plan is formed in step S108, taking into consideration the order of priority determined as illustrated in FIG. 11 with respect to each operation starting date calculated in step S107. Thus, upon arrival of the vessel, the provisional operation plan is determined with respect to the arriving vehicles that are known at this point of time.

The provisional operation plan is determined based on the order of priority as illustrated in FIG. 11. Basically, vehicles that were shipped by the previous vessel and have not been worked on are given the highest priority, and the order of priority for vehicles shipped by the present vessel is determined by taking account of the following factors (i) through (v) in this order:
(i) the desired delivery date as counted from the date on which operations can be performed on the vehicle (i.e., the date of arrival of the vessel in this example);
(ii) the date on which an order for the vehicle is sent from a dealer to a distributor;
(iii) order type (e.g., a customer order, an order based on dealer's expectation, an order for a demonstration vehicle, etc.);
(iv) the priority order concerning dealers (for example, higher priorities are given to dealers that sell a larger number of vehicles in the previous year), and
(v) vehicle identification number (VIN).

If the desired delivery date has been entered by a dealer, the operation plan is formed by giving the highest priority to the desired delivery date. The thus formed operation plan satisfies the requirements of customers.

Although the desired delivery dates are entered by dealers in the above-described example, the desired delivery dates entered by customers may also be used.

After the operation plan is formed in step S106 or step S108, the thus-planned operations are combined with the remainder of planned operations and the remainder of operations (i.e., operations that were not performed) from the previous day in step S109. The priority order is determined in this case such that the higher priorities are given to the remainder of operations from the previous day, the remainder of operations planned for the previous day, and the operations planned for the present day. Next, on the basis of the total operation plan, a plan for the present day is formed in step S110 through the process as illustrated in FIGS. 6A and 6B. Then, the accessories required for the planned operations are checked. If there is any lack of accessories or stockout, the operation plan is determined in step S111 by replacing an operation for which accessories are lacking, by an operation that is outside the present day's plan but is given the highest priority among operations outside the same plan.

In this manner, the operation plan for the present day is determined by correcting the operation plan (provisional) made at the time of arrival of the vessel, at the computer of the distributor. Until the next vessel arrives, data is updated with respect to a new order received, and the process returns to step S105 in which the operation plan is corrected.

After the operation plan is determined in S111, a procedure of actual operations is scheduled. First, the vehicles are classified into some groups in accordance with the number of days required for secondary transportation to the dealers, and the operations start being performed with high priority on the vehicles that require a large number of days for second transportation (step S112). The operation starting times are then rearranged in step S113 so that the operations will be completed with respect to a lot representing the transportation capability (n vehicles / trailer) for each delivery direction. On the basis of the procedure of starting the operations, the number of trailers and the vehicle-loading time slot are determined, and the trailers are arranged in step S114. Then, in accordance with the order of operations, various instructions, including (i) an instruction to bring in a vehicle to be worked on, (ii) an instruction to prepare accessories, (iii) an instruction to perform new can inspection, and (iv) an instruction to carry the vehicle out to a distribution standby zone, are generated. Finally, an instruction to load a trailer with vehicles (in a distribution process) for each direction of delivery is generated in step S116.

As described above, the computer of the distributor may be used for receiving orders for vehicles that are in the pipeline, making an operation plan with respect to the received vehicles, correcting the operation plan based on the actual operating state, and determining the operation procedure and the distribution procedure for the present day.

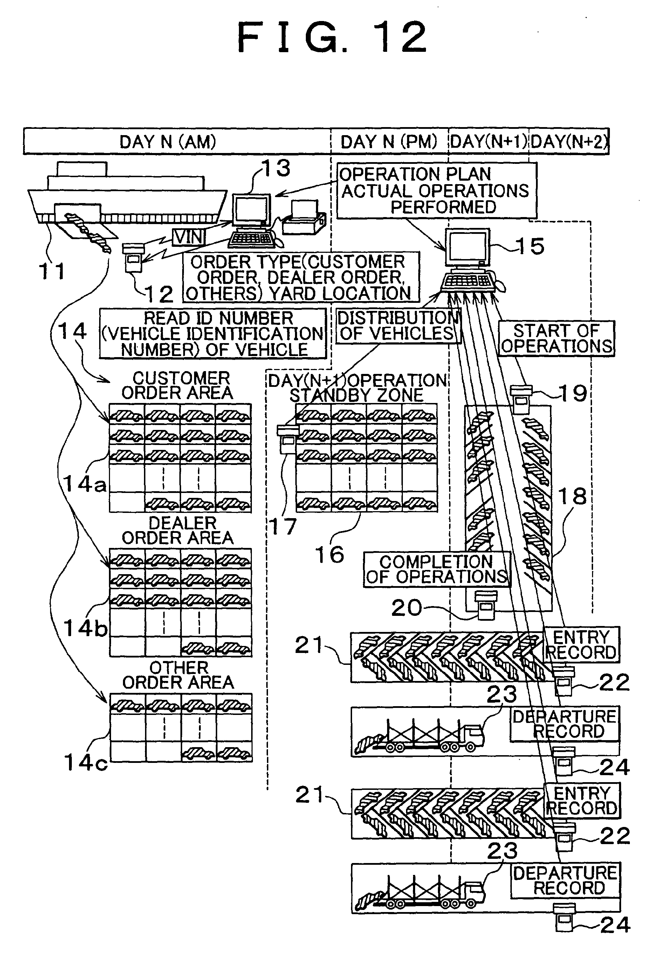

Next, a procedure that starts upon arrival of a vessel loaded with vehicles and ends upon delivery of the vehicles will be described with reference to FIG. 12. Initially, a transport vessel 11 arrives at a port, and vehicles are unloaded from the vessel 11 on Day N (AM: morning). Then, an ID number VIN (vehicle identification number) that is specific to each of the vehicles unloaded from the vessel is read by means of a barcode reader 12, and is sent to an operation planning system 13 provided at a distributor for making an operation plan. The operation planning system 13, i.e., a computer at the distributor, stores the specifications of each vehicle carried by the vessel 11, in association with the VIN. In this case, in particular, a temporary yard for the unloaded vehicles is determined based on the order type, i.e., depending upon whether the order received for the vehicle is placed by a customer, or is placed based on prediction of a dealer, or is among other types of order. A table indicating the relationship between the locations in the temporary yard and the order types is prepared in advance. In response to an input of VIN of a vehicle from the barcode reader 12, the operation planning system 13 sends back a location in the temporary yard 14 at which the vehicle in question is to be placed. Then, the barcode reader 12 designates the storage location for the vehicle. This designation may be indicated on a display screen of the computer though it is a normal practice to print out specific instructions. Then, a driver of the unloaded vehicle parks the vehicle at the designated location.

In FIG. 12, the vehicle yard is divided in accordance with the types of orders, that is, is divided into a customer order area 14a, a dealer order area 14b, and other order area 14c, for example. Addresses are respectively assigned to all divisions in each area. With this arrangement, a driver of an unloaded vehicle parks the vehicle at a designated location based on an instruction from the barcode reader 12.

Next, the operation planning system 13 at the distributor sends data regarding an operation plan to an operation progress management system 15. The operation progress management system 15 sends data regarding actual operations performed, to the operation planning system 13. With this arrangement, the operation planning system 13 forms an operation plan in view of the actual operations performed on the previous day.

The operation progress management system 15 manages operations starting at the temporary vehicle yard 14, actual operations performed on vehicles, and operations up to the delivery of the vehicles. On the basis of the determined operation plan for the present day, the operation progress management system 15 gives instructions to move vehicles from the temporary yard 14 to a Day (N+1) operation standby zone 16 on the day (Day N, afternoon) previous to the operations performed on the vehicles. Then, vehicles are moved based on instructions. The movements are detected by a barcode reader 17, and results of detection are supplied to the operation progress management system 15. The barcode reader 17 may detect the entry of a vehicle to the Day (N+1) operation standby zone 16, or may detect the actual parking of a vehicle at the location.

On Day (N+1), one vehicle is moved at a time from the Day (N+1) operation standby zone 16 into an operation zone (new vehicle inspection center) 18, and is subjected to an accessories mounting operation or operations and a new-vehicle inspecting operation in accordance with an operation procedure determined as described above. Abarcode reader 19 is provided at an entrance of the new vehicle inspection center 18, for detecting an actual entry of a vehicle into a working operation, and supplying a result of detection to the operation progress management system 15 as a record of starting of operations. Vehicles moved out of the new vehicle inspection center 18 after the completion of the operations are detected by a barcode reader 20. Results of detection are supplied to the operation progress management system 15 as a record of completion of the operations.

After operations are completed in the new-vehicle inspection center 18, the vehicles are moved into stock yards 21 corresponding to the respective directions of delivery. Instructions for this operation are also given by the operation progress management system 15. The entry of vehicles to the stock yards 21 is checked by barcode readers 22, and results of detection are supplied to the operation progress management system 15. The vehicles are then loaded into trailers 23 prepared separately for the directions of delivery, and are transported. The departure of vehicles from the stock yards 21 is checked by barcode readers 24, and is transmitted to the operation progress management system 15.

The operation progress management system 15 manages the vehicles stored in the Day (N+1) operation standby zone 16 from the time when operations are performed on the vehicles, to the time when the vehicles are delivered out. Although the barcode readers 12, 17, 19, 20, 22, 24 are used in the illustrated embodiment, the barcode readers may be replaced by any device capable of recognizing vehicles, for example, high-frequency tags, IC cards, magnetic cards, etc.

According to the present embodiment, it is possible to enter a desired delivery date at a dealer. Since an operation plan can be formed based on the desired delivery date, appropriate operation planning can be accomplished in accordance with requests from customers and dealers.

As described above, according to one embodiment of the invention, an order is placed for accessories to be mounted on products that are being transported, so that accessories mounting operations can be smoothly started immediately after arrival of the products. In particular, in the case where the products are transported to a foreign country on a vessel over a long period of time, for example, accessories can be ordered in advance, i.e., before the arrival of the vessel, thus assuring improved operation efficiency, and a reduction in the lead time up to the delivery of the products.

Furthermore, specifications of products that are expected to be ordered can be predicted based on the demand, and necessary accessories can be ordered based on the predicted specifications. Therefore, the operation of mounting the accessories on the products can be performed only requiring a safety stock of accessories that were prepared for the expected days but are not actually used. Since the prediction is based on information immediately prior to the mounting operations, the probability of a prediction error or failure is considerably low.

Since an operation plan is formed based on the predetermined order of priority, variations in the lead time up to the delivery of a product to a customer will be considerably reduced, and variations due to a failure to make a plan or the like can be eliminated.

Furthermore, the operation plan is formed in view of the capability or capacity of mounting accessories on products, and therefore an excessively large number of operations that exceeds the operation capability will not be performed.

Furthermore, since restrictions relating to the direction of delivery are taken into consideration, the size of a place for storing products after being equipped with accessories can be reduced.

Still further, a higher priority is given to the operation of mounting accessories on a product ordered by a customer, than to the operation of mounting accessories on a product ordered based on expectation. It is thus possible to complete the operations with respect to the products that have been already ordered.

Still further, the number of man-hours for the accessories mounting operations that can be accomplished within a unit period or time is stored as a restriction value. The number of man-hours for operations of mounting accessories on the products ordered by customers and the products ordered based on prediction are calculated. The operations on the products ordered by customers and the products ordered based on prediction are allocated up to the restriction value, with a higher priority being given to the products ordered by customers. Therefore, operation planning within the capacity limit can be realized.

The restriction value is preferably set separately for each destination of transportation. This makes it possible to form an operation plan that incorporates restrictions regarding transportation.

Furthermore, if a desired delivery date is set for a product ordered by a customer, it is preferable to make an operation plan in view of the desired delivery date. This makes it possible to make an operation plan such that products can be delivered to customers in accordance with their requests.

An operation planning method is provided for making an operation plan for receiving a plurality of products from a supplier, and mounting at least one item on each of the products based on specifications of each product. In this method, information relating to the products received from the supplier is initially acquired. The products received is a mixture of products whose specifications are determined before transportation of the products from the supplier, and products whose specifications are not determined by the time of transportation of the products. Then, an order is placed for desired items to be mounted on the products whose specifications are determined before transportation thereof, and an order is placed for desired items to be mounted on products whose specifications are determined during transportation thereof.

## Claims

1. An operation planning method of making an operation plan for receiving a plurality of products from a supplier, and mounting at least one item on each of the products based on specifications of the each product, comprising the steps of:
acquiring information relating to the products received from the supplier, the products being a mixture of products whose specifications are determined before transportation of the products from the supplier, and products whose specifications are not determined by the time of transportation of the products; and
making an operation plan so as to place an order for desired items to be mounted on the products whose specifications are determined before transportation thereof, and place an order for desired items to be mounted on products whose specifications are determined during transportation thereof.

2. The method according to claim 1, further comprising:
predicting specifications of products whose specifications are not determined within a predetermined period during transportation thereof, based on demand for the products; and
placing an order for items to be mounted on the products based on the predicted specifications.

3. The method according to claim 1 or claim 2, wherein the operation plan is formed by determining the order of priority in item mounting operations for mounting the items on the respective products, based on a predetermined priority determining procedure, and performing the item mounting operations in accordance with the determined order of priority.

4. The method according to any one of claims 1-3, wherein the operation plan is formed by adjusting a schedule of item mounting operations for mounting the items on the respective products, taking account of operation capacity of performing the item mounting operations on the products.

5. The method according to claim 4, wherein the operation capacity is limited by a quantity of products on which each type of item mounting operations can be performed.

6. The method according to claim 4 or claim 5, wherein the operation capacity is limited by an amount of labor time required for performing each type of item mounting operations on each of the products.

7. The method according to any one of claims 1-6, wherein the operation plan is formed by adjusting a schedule of item mounting operations for mounting the items on the respective products, taking account of restrictions on a quantity of products that can be delivered upon completion of the item mounting operations, the restrictions being set for respective directions in which the products are delivered.

8. An operation planning method of making an operation plan for receiving a plurality of products from a supplier, and mounting at least one item on each of the products based on specifications of the each product, comprising:
making a schedule of item mounting operations for mounting the items on the products such that the operations can be accomplished within a predetermined period of time, the item mounting operations including operations for mounting the items on the products that have been ordered by customers, and operations for mounting the items on the products that are expected to be ordered by customers,
wherein the schedule is adjusted by giving the higher priority to the operations for mounting the items on the products that have been ordered by customers, than to the operations for mounting the items on the products that are expected to be ordered by customers.

9. The method according to claim 8, further comprising:
storing a limit amount of labor time that can be used to perform the item mounting operations within a predetermined period of time;
calculating an amount of labor time required for performing the item mounting operations for the products that have been ordered, and an amount of labor time required for performing the item mounting operations for the products that are expected to be ordered; and
allocating the limit amount of labor time to the item mounting operations for the products that have been ordered and the item mounting operations for the products that are expected to be ordered, while giving the higher priority to the item mounting operations for the products that have been ordered.

10. The method according to claim 9, wherein the limit amount of labor time is set with respect to each destination of transportation of the products.

11. The method according to any one of claims 8-10, wherein:
when a desired delivery date is designated with respect to each of the products that have been ordered by customers, the operation plan is made in view of the desired delivery date.

12. An operation planning apparatus for making an operation plan for receiving a plurality of products from a supplier, and mounting at least one item on each of the products based on specifications of the each product, comprising:
means for acquiring information relating to the products received from the supplier, the products being a mixture of products whose specifications are determined before transportation of the products from the supplier, and products whose specifications are not determined by the time of transportation of the products;
means for placing an order for desired items to be mounted on the products whose specifications are determined before transportation thereof:
means for acquiring information relating to products whose specifications are determined during transportation thereof: and
means for placing an order for desired items to be mounted on the products whose specifications are determined during transportation thereof.

13. An operation planning apparatus of making an operation plan for receiving a plurality of products from a supplier, and mounting at least one item on each of the products based on specifications of the each product, comprising:
means for storing a limit amount of labor time that can be used to perform item mounting operations for mounting the items on the products within a predetermined period of time;
means for calculating an amount of labor time required for performing the item mounting operations on the products that have been already ordered by customers; and
means for calculating an amount of labor time required for performing the item mounting operations on the products that are expected to be ordered by customers but have not been ordered,
wherein the limit amount of labor time is allocated to the item mounting operations for the products that have been ordered and the item mounting operations for the products that are expected to be ordered, while giving the higher priority to the item mounting operations for the products that have been ordered.
